# EUROPEAN PATENT APPLICATION

(11) **EP 2 175 590 A1**
(43) Date of publication of application: **14.04.2010**
(21) Application number: 08305664.8
(22) Date of filing: 10.10.2008
(51) Int. Cl.: H04L 12/46, H04L 12/56

(54) **Method and apparatus for communicating over multiple networks**

(71) Applicant: Thomson Licensing, 92443 Issy-les-Moulineaux Cedex (FR)
(72) Inventor: Yu, Jin Fei, 100083, Beijing (CN); Wang, Min, 100083 Beijing (CN); Zhang, Junbiao, 100085 Beijing (CN)
(74) Representative: Ruellan-Lemonnier, Brigitte

(57) **Abstract**

An Asymmetric Data over Coaxial (ADoC) dual mode device provides support for both wired and wireless modes of operation, and can switch between these two modes periodically. In ADoC (wired) mode, the dual mode device operates as ADoC Station while in WLAN (wireless) mode, it operates as WLAN Access Point. In one particular implementation, a communication unit (3100, 3104, 3106) is configured for communicating over multiple media including a wireless medium and a wired medium, the communication unit being operable (1) in a wireless mode for communicating over a wireless medium using a wireless protocol, and (2) in a wired mode for communicating over the wired medium using a variation of the wireless protocol. A Media Access Control (MAC) layer uses a polling mechanism basic access method for the wired mode. A switch (3104) allows switching the communication unit between the wireless mode and the wired mode.

## Description

### BACKGROUND

### Technical Field

This disclosure addresses a variety of aspects of communications systems generally. More specifically, it addresses the dual mode aspects of transmitting data over a wired network and a wireless network and the use of wireless data transmission protocols for both the wired and wireless networks.

### Background

Communications systems exist for connecting users to information. Such systems may use coaxial cable as well as wireless networks. Existing systems exhibit a variety of limitations.

### SUMMARY

According to a general aspect, communication occurs over multiple media including a wireless medium and a wired medium, the communicating using one or more of (1) a wireless mode for communicating over a wireless medium using a wireless protocol, and (2) a wired mode for communicating over the wired medium using a variation of the wireless protocol, wherein said communicating further comprises providing a Media Access Control (MAC) layer utilizing a polling mechanism basic access method for the wired mode. Switching also occurs between the wireless mode and the wired mode.
The details of one or more implementations are set forth in the accompanying drawings and the description below. Even if described in one particular manner, it should be clear that implementations may be configured or embodied in various manners. For example, an implementation may be performed as a method, or embodied as an apparatus configured to perform a set of operations or an apparatus storing instructions for performing a set of operations. Other aspects and features will become apparent from the following detailed description considered in conjunction with the accompanying drawings and the claims.

### BRIEF DESCRIPTION OF THE DRAWINGS

Fig. 1A illustrates a simplified exemplary Polling mechanism MAC access network architecture.
Fig. 1B illustrates another network architecture.
Fig. 2 illustrates the 802.11 MAC sublayer in OSI reference model.
Fig. 3 is a block diagram of a Polling mechanism MAC (ADoC) STA.
Fig. 4 is a block diagram of a Polling mechanism MAC (ADoC) STA having a dual mode device according to an implementation.
Fig. 5 is a block diagram of a hardware implementation of the Polling mechanism MAC (ADoC) STA dual mode device.
Fig. 6 is a block diagram of another hardware implementation of the Polling mechanism MAC (ADoC) STA dual mode device.
Fig. 7 is a block diagram of an implementation of the dual mode device in a modem.
Fig. 8 is a timing sequence diagram for a multi-packet Poll procedure in the Polling MAC design according to an implementation.
Fig. 9 is a timing sequence diagram of a Retransmission procedure for acknowledgement timeout according to an implementation.
Fig 10 is timing diagram of the Polling mechanism MAC superframe structure according to an implementation.

### DETAILED DESCRIPTION

### General description

### Application scenario

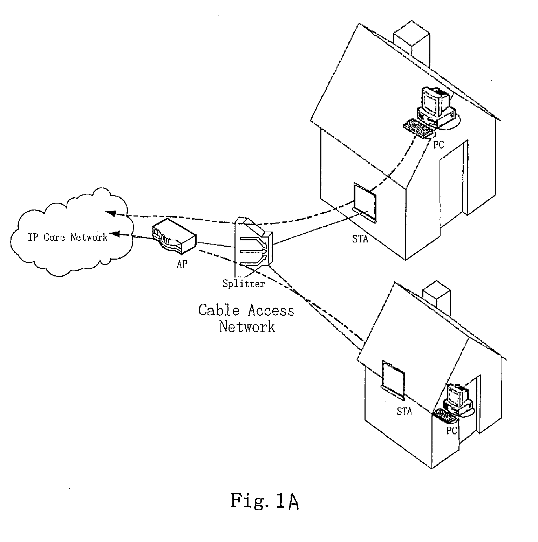

In order to provide data service over existing coaxial cable TV system (CATV), at least one implementation deploys a Polling mechanism protocol (particularly as part of the MAC layer procedure) that operates with existing Access Points (APs) and stations (STAs) in the cable access network. The AP and STAs are connected via splitters in the hierarchical tree structure. In this way, the user at home can access the remote IP core network via the cable access network. The detailed network topology is illustrated as illustrated in Fig. 1A.
As can be seen from Fig. 1A, in this typical access network infrastructure, there is an AP which has one Ethernet Interface in connection with the IP core network, and one coaxial cable interface in connection with the cable access network. On the other end of the cable access network, there are a plurality of stations (STAs), i.e. terminals, which connect with the cable access network via the coaxial cable interface and connect with the home LAN (Local Area Network) via the Ethernet interface. More details of the ADoC system described above can be found in the International Application No. PCT/CN2007/002615 filed on August 31, 2007, the entire contents of which is incorporated herein by reference.

According to at least one implementation, both the APs and STAs implement the polling mechanism protocol separately in the link control sublayer, MAC sublayer and physical layer, according to 802.11 series specifications. However, in the MAC sublayer, the polling mechanism of the present invention utilizes the DCF in the 802.11 frame transmission entity, thus providing advantages over known methods by being simple to implement, not requiring the definition of a new frame, not requiring any changes in the association procedure, and by eliminating the need for time slot allocation for determining when a STA can join (or connect to) an AP.

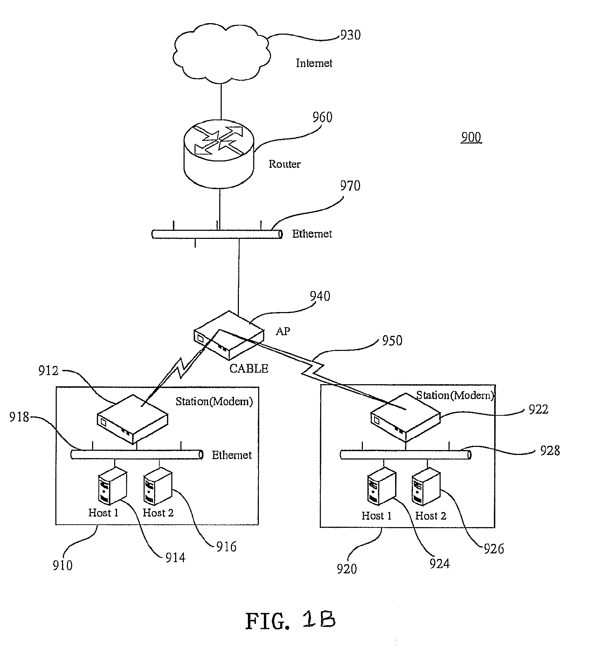

Referring to Fig. 1B, a network 900 is shown. The network 900 provides a connection from user homes 910 and 920 to the Internet (or another resource or network) 930. The user homes 910 and 920 connect through an access point (AP) 940 over a cable system 950. The AP 940 may be located, for example, in a neighborhood of the homes 910 and 920, or in an apartment building that includes the homes (apartments, in this case) 910 and 920. The AP 940 may be owned by a cable operator, for example. The AP 940 is further coupled to a router 960 over an Ethernet network 970. The router 960 is also coupled to the Internet 930.

As should be clear, the term "coupled" refers to both direct connections (no intervening components or units) and indirect connections (one or more intervening components and/or units). Such connections may be, for example, wired or wireless, and permanent or transient.

The user homes 910 and 920 may have a variety of different configurations, and each home may be differently configured. As shown in the network 900, however, the user homes 910 and 920 each include a station (referred to as a modem) 912 and 922, respectively. The modems 912, 922 are coupled to a first host (host1) 914, 924, and a second host (host2) 916, 926, over an Ethernet network 918, 928, respectively. Each host 914, 916, 924, and 926 may be, for example, a computer or other processing device or communication device.

### Basic approach

The main idea of the Polling mechanism of the present implementation is to transmit IEEE 802.11 frames in the coaxial cable media instead of over the air. The purpose of utilizing the IEEE 802.11 mechanism is to make use of the mature hardware and software implementation of 802.11 protocol stacks.

The main feature of the polling mechanism is the MAC Superframe structure used such that the polling time is divided into subframes, and in each subframe the AP will poll the STAs according to an associated ID time. After all STAs in the AP's station list are polled one time, the subframe has ended and another is started.

The polling mechanism utilizes a DCF (Distributed Coordination Function) for the uplink and provides a completely different approach to the MAC layer procedure in the dual mode ADoC device of the present invention. Thus, the polling mechanism access method defines a new detailed implementation of frames transmission entity located in MAC sublayer.

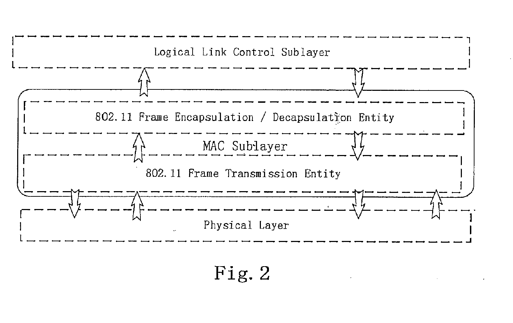

For the purpose of comparison, here we illustrate IEEE 802.11 MAC sublayer protocol in the OSI reference model as shown in the Fig. 2.

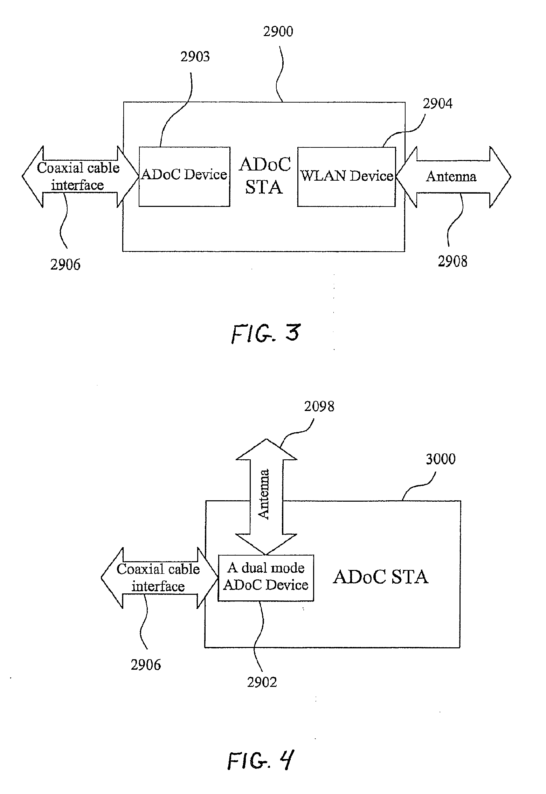

Referring to Figure 3, an inventive implementation for the hardware implementation of an ADoC STA 2900 is integrated into two devices, an ADoC device 2903 and a WLAN device 2904, into a colligated STA. The ADoC device 2903 will be connected with a coaxial cable interface 2906 to support bi-directional data communication in cable network, while the WLAN device 2904 will be connected with an antenna 2908 to support bi-directional data communication in WLAN network. The STA 2900 will swap the data frames between ADoC device 2903 and WLAN device 2904 if needed, in order to enable PCs in the WLAN network to access the Internet via the ADoC STA.

The STA architecture presented in Figure 3 requires two standalone devices for channel encoder /decoder and data processing to provide Internet access functionality for Personal computers in the home WLAN. The present principles provide a solution which utilizes one standalone dual mode device, and which is capable of switching between ADoC mode and WLAN mode periodically, to provide the same access functionality for local networks.

The dual mode ADoC device of the present principles can support both ADoC mode and WLAN mode and switch between these two modes periodically. In ADoC mode, the dual mode device operates as an ADoC STA; while in WLAN mode, it operates as a WLAN AP.

By using the single dual mode device solution of the present principles, instead of two devices in the classical solution shown in Figure 3, ADoC STAs embedded with this dual mode ADoC device can provide Internet access functionality for local networks. As a result, the manufacturing cost for an ADoC STA with Internet access support via the cable access network can be decreased by almost half the original cost, in comparison with the classical solution of the two devices shown in Figure 3.

In order to realize the dual mode device 2902 of the present principles, the standard ADoC device 2903 is modified and evolved based on a mature WLAN device. It is different from the WLAN device 2904 mainly in two aspects: 1) In physical implementation aspect, its RF operates in ADoC frequency band (about 1 GHz) instead of standard 802.11 frequency band (about 2.4 GHz); and 2) In the MAC (Media Access Control) layer, it does not utilize the conventional 802.11 DCF (Distributed Coordination Function) or PCF (Point Coordination Function) mechanism to exchange MAC frames. Rather, it uses a Polling Mechanism protocol to transmit MAC frames.

As shown in Figure 4, the dual mode ADoC device 2902 will be connected with a coaxial cable interface 2906 for the interconnection with cable access network, and at the same time, be connected with an antenna 2908 to support bi-directional data communication in WLAN network. The ADoC STA 2900 will swap the data frames received during these two modes from this dual mode ADoC device 2902 if needed.

### Hardware architecture of the dual mode ADoC device

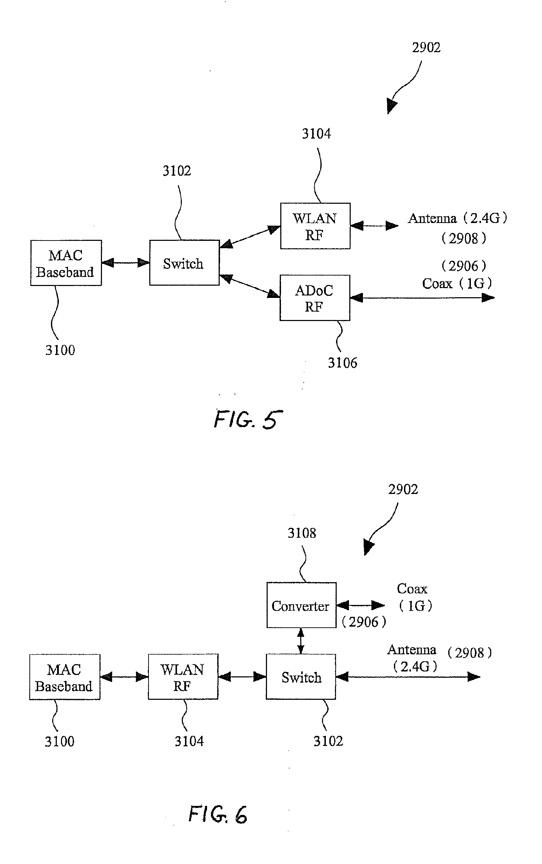

According to one hardware implementation of the dual mode ADoC device 2902 shown in Figure 5, a switch 3102 is provided which is a circuit configured to switch between the WLAN RF circuit 3104 and ADoC RF circuit 3106. The switch 3102 can be controlled by the MAC layer software (e.g., a polling mechanism). This implementation requires that the WLAN chipset be modified and the switch 3102 is added to the modified chipset.

According to another hardware implementation shown in Figure 6, the location of the switch 3102 can be changed in terms of adjacency with the device's MAC baseband part 3100. In this implementation, the converter 3108 decreases the WLAN frequency band, which is the output of the WLAN RF 3104 and is about 2.4 GHz, to the ADoC spectrum, which is about 1 GHz and can reach a relative long distance in the coaxial cable. Note that the MAC baseband part 3100 may be characterized as a communication device configured to enable a user device to communicate with the dual-mode ADoC device 2902.

In contrast to the implementation of Figure 5, the implementation of Figure 6 is external to the existing WLAN chipset, and as such, does not require modifying the WLAN chipset.

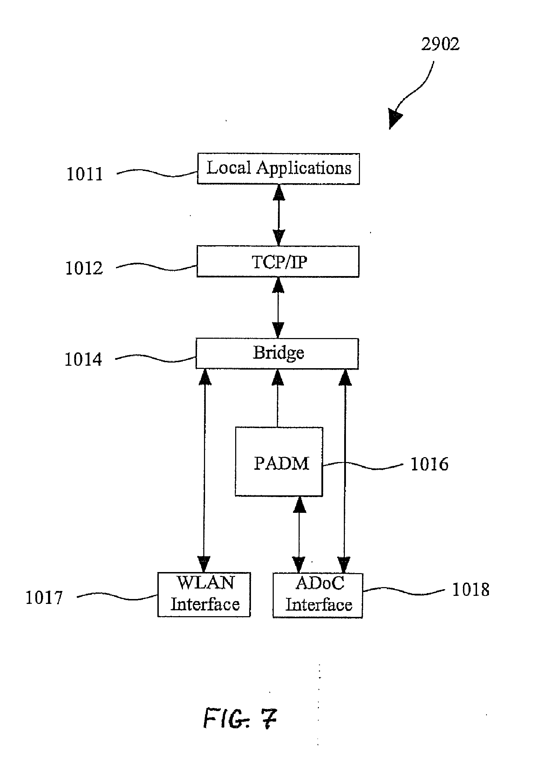

According to one implementation, the dual mode device 2902 of the present principles is integrated into a modem. This modem may operate as an ADoC STA or a WLAN AP. Figure 7 shows an example of such implementation. As such, when the dual mode device 2902 is operating or performing standard WLAN communication (i.e., when operating in the appropriate time period), the device allows the user PCs to connect to the internet. In this implementation, the PC user would request an internet address (e.g., a webpage) by sending a request for the internet address to a modem over the wireless medium through a WLAN interface, and 2) the modem relays the request over the cable network to the ADoC AP via the ADoC interface, then to the router, then to the internet.
In this implementation, the dual mode device 2902 includes an ADoC Interface or device 1018 rather than an Ethernet interface.

When the modem's dual mode device operates in WLAN (i.e. wireless mode), the device acts as a WLAN AP, and the Personal computer acts as WLAN Station (STA), where the dual mode device receives the request from the Personal computer via the wireless link between the modem and Personal computer. The dual mode device relays the received request to the bridge, and the bridge determines if the dual mode device needs to send the request out over the cable via the ADoC interface in the dual mode device, or send the request to other PCs in the residential network, based on the destination address information in IP packets for this request. The bridge then sends the request back down to the dual mode device.

In order for the request to establish an external connection, the dual-mode device holds that request until the dual mode device enters ADoC mode (i.e., wired mode), at which time the dual mode device acts as an ADoC station and sends out the request over the wired network to the ADoC AP, via the ADoC interface.

In order for the request to establish an internal connection with other PCs in the residential network, the dual mode device holds that request until the dual mode device enters the WLAN mode (i.e., wireless mode), at which time it acts as a WLAN AP and sends out the request over the wireless medium to the destination PC via the WLAN interface.

When the dual mode device receives any response from the associated ADoC AP in the cable network, or other PCs in the local network, the reverse process will be performed.

As is clear from the foregoing discussion, in at least some implementations common circuitry or software (for example) may be used to perform much of the processing associated with both the WLAN mode and the ADoC mode. For example, the reception and depacketizing of data from both modes, as well as converting between the two modes may be performed by a common unit. Various applications potentially requiring such conversion include (1) a modem receiving a WLAN mode input from a computer (such as a request for Internet access) and sending the input out using the ADoC mode, and (2) a modem receiving requested Internet data in the ADoC mode and sending the data to a computer using the WLAN mode. These scenarios will typically involve a conversion between different protocols.

Various implementations of a dual-mode device use a communication unit to enable communication in one or more modes. A communication unit may include, for example, dual mode ADoC device 2902, or portions thereof such as, for example, MAC baseband 3100, WLAN RF 3104, and ADoC RF 3106.

Note that a modem may include not only a dual-mode device as described above, but may also include interfaces to enable communication across other networks (in addition to WLAN and ADoC). Such other networks may include, for example, an Ethernet network. Accordingly, a modem may include, for example, dual-mode device 2902 enabling communication across WLAN and ADoC networks, and Ethernet interface 1015.

### Polling MAC Design

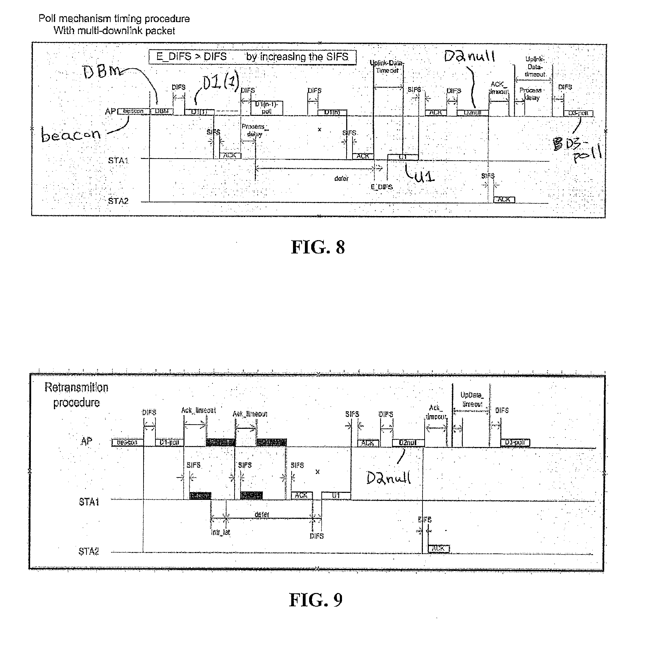

Referring to Figure 8, there is shown the basic timing sequence for the multi-packet poll procedure according to an implementation. In this diagram the poll procedure is shown for an un-fixed queue depth.
After a beacon, the AP should start to transmit downlink data (D1) after DIFS. Because in the polling mechanism implementation the AP always controls the channel, the backoff procedure of 802.11 DCF protocol can be disabled. If there is more than 1 packet (D1 (1... n-1)) for station 1, the AP should transmit the queue continuously. After receiving the first data packet from the AP, the station 1 will think it has been polled, and will prepare to transmit its uplink data (U1) if it has uplink data. Because the E_DIFS used by the station is longer than the DIFS using by AP, the uplink data can not access the channel until the entire downlink packets from AP has been transmitted. After the AP receives the uplink data (U1) correctly or waits for the uplink-data-timeout (see below), the AP will start to poll the next station 2 using downlink packet D2(1...n-1). If there are no downlink packets stored in the AP for station 2, the AP will use a NULL packet with a destination address that is the MAC address of station 2. Station 2 will perceive the NULL packet as a polling frame as well, and will start to transmit its uplink data (U2) also. After receiving U2 correctly or waiting for the uplink-data-timeout, the AP will continue polling and poll the next station 3, accordingly and continue until the last station in its list.

### Downlink Data/Poll Frame/null:

The transmission here is performed using a normal DCF scheme. In the event there are data packets restored in the AP for a STA, then the data transmitted to it should be considered as "poll frame". For the station without packets restored in the AP site, the AP will transmit a NULL data frame to it. The number of data packets to each station in one poll period is stochastic. Basically, the packet in the queue of each station will be delivered in one time.

However, when considering the burst condition in traffic shape models, there may be more downlink data packets than the design can handle. Thus, in the AP site, before inserting the packet into the queue to transmit, the AP should consider the traffic limitation for the relevant STA. The traffic limitation for each STA can be calculated from the bandwidth it ordered. The traffic over this traffic limitation should not be transmitted in the current transmission.

### Uplink data

The transmission here is also performed using a normal DCF scheme. However, the DIFS (Distributed (coordinated function) interframe space) is longer than the normal DIFS (i.e., Extended DIFS, or E_DIFS). This is done by increasing the global SIFS or global SLOT in the STA site by writing the relevant registers.

For each uplink, the polling mechanism allows only one packet per poll. Each STA joining an AP will stop to transmit any data and wait for the AP to poll. The AP will poll the STAs using the normal unicast data packet. If, in the scenario with uplink bandwidth needs to be increased, this can be achieved by increasing polling times. Alternatively, increase bandwidth can be achieved by allocating a fixed length time for the specific STA through the setting of a waiting timer in the AP. Thus, the after a STA is polled by the AP, it will get some free time during the waiting time for receiving the next poll. During this waiting time, the STA can service a WiFi system, but in order to avoid missing the next poll from the AP, the STA must revert back from the Wifi mode to the waiting mode to receive the next poll. For example, 10ms can be used to define the minimum period of the subframe to accommodate this reversion back to poll receiving mode.

The E_DIFS is longer than DIFS, but should be less than SIFS + 2*SLOT + SLOT.

If Quality of Service (QoS) is enabled in the system, the E_AIFS (extended AIFS) will be longer than the normal AIFS (arbitration interframe space) by increasing the global SIFS (short interframe space) or SLOT. However, to ensure the higher priority data has higher priority access to the channel, the E_AIFS of higher priority data in STA site should be less than the lower priority data in AP site. For example, E_AIFS of VO priority data in STA should be less than E_AIFS of VI priority (lower than VO priority) data in AP site.

### ACK Timeout - Timing sequence

Figure 9 shows the retransmission procedure and timing sequence for acknowledgement (ACK) timeout. For example, the ACK timeout occurs at the first downlink data (D1) for station 1. After transmitting the D1, the AP will wait for the ACK from station 1. If there is no ACK after a setting timeout (i.e., which timeout is set by writing some register) time, the AP will think the ACK is lost. Then the D1 will be retransmitted. The ACK timeout value is longer than SIFS and shorter than the time for transmitting an ACK frame. This can make sure the AP can get the channel always.

### Uplink-data-timeout

After transmitting a data-poll frame successfully and receiving the ACK correctly the AP will start the Uplink-data-timeout procedure.

To get accurate timing sequence, the Uplink-data-timeout procedure should be executed by software & hardware. On the software side: after confirming the downlink packet has transmitted correctly, the timeout value should be calculated and written into some hardware register (or counter). Before this, the next downlink packet for next station should be prepared and let hardware know it. On the hardware side: hardware should count down the timeout counter and if the channel is detected as idle till the counter reach zero, the next packet should be transmitted according to the normal DCF procedure. If the channel is detected as busy when the counter reaches zero (for example, the station is transmitting its uplink data), the AP will stop the transmission of next downlink packet. The transmission should be restarted after the channel becoming idle again according to normal DCF procedure.

### Broadcast/multicast Packet Procedure

For AP, the broadcast/multicast data frame should not be used as a polling frame. The broadcast/multicast packets should be listed into a special queue. They will be transmitted immediately after a beacon frame. After that, AP starts the polling procedure.

For STA, there is no beacon frame. The broadcast frame can be thought as unicast packet and transmitted like a normal uplink packet. When STA receives the broadcast/multicast packet, it will be processed normally like 802.11 protocol and not thought as polling frame.

### STA Join procedure

### There are two modes for the STA to find and join a BSS,

1. Active scan, find the BSS by sending probe request frame. Then, there is an issue: the probe request frame may be in conflict with the STA's up link data, if these two STAs are working in the hidden condition.
2. Passive scan, find the BSS by listening for the beacon frame. Here there is an issue too: After receiving the beacon and preparing to join, the STA will start to send the first Authentication frame. However, it also could have a conflict with the uplink data.

To resolve these issues, the STA should be initialized to a special mode before it starts working: Set the DIFS to longer time to ensure it does not transmit any data when the BSS is working in polling mode.

Then, at the end of a super frame, the AP shall stop to transmit data frame for a period of time (for example, 3ms) to wait for a new STA to join. Because the STAs in the BSS only transmit data after being polled, if the AP stops transmitting a data frame, then there is no data frame transmitted by STA. The new STA will get the channel to transmit the management frame for joining the BSS.

### MAC laver procedure of the dual mode ADoC device

According to another implementation, in a dual mode ADoC device 2902, the basic access method is a Polling Mechanism, which is the same with the MAC layer protocol in the ADoC device 2903.

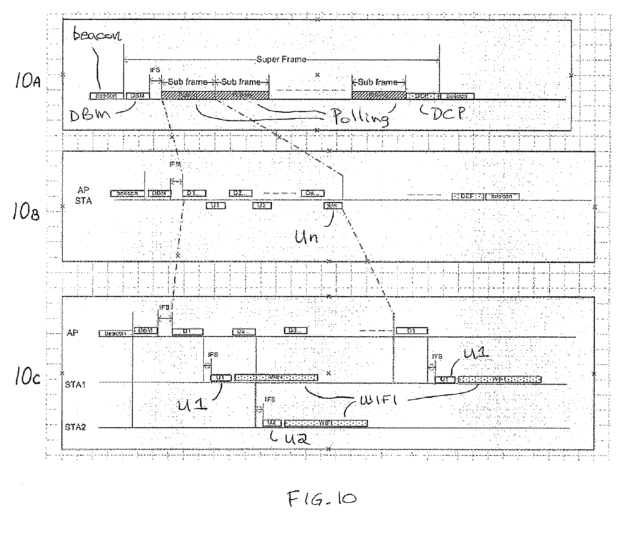

Figure 10(a) shows an example of the Polling mechanism MAC Superframe structure according to an implementation. As shown, the time between two (2) beacons is defined as super frame (or beacon period). In the polling mechanism superframe, the time is divided into three (3) parts: DBM, Polling sub frames and DCF. DBM (Data of Broadcast and Multicast) is used to transmit broadcast/multicast frames and comes immediately after a beacon. DCF is the standard 802.11 DCF MAC used for management frames, especially for new STA's to join the Basic Service Set (BSS) created by the access point when the system is working with the polling mechanism of the present principles. The other time is used for Polling sub frames. The polling subframe is generally the time for an AP to poll all the STAs in the AP's list of stations.

Those of skill in the art will recognize that the inter frame space (IFS) is shown in the diagrams and is the same as used in WiFi protocol, i.e., a time period to determine if the channel is idle.

When the ADoC system is working with the Polling mechanism of the present principles, all STAs associated with the AP will not transmit any data until the AP polls it. Figure 10(b) shows the Polling time divided into some subframes D1, D2...Dn (downlink) and U1, U2...Un (uplink). In each subframe, the AP will poll the STAs according to the associated ID one time only. After the AP polls STA1, the STA1 will transmit some data packets to the AP and then stop. Then, the AP will poll STA2, and so on. After all the STAs in AP's station list are polled one time, a subframe is ended. Then another subframe is started.

According to this implementation, during a subframe (e.g., D1, D2...Dn, U1, U2... Un), a STA gets one chance to transmit a packet. After transmitting the limited length uplink packet, the STA must stop and wait to be polled in the next subframe. So during the waiting time, the STA can be switched to standard WiFi system from ADoC system and work as an AP to service other standard WiFi STAs which do not belong to the ADoC system, if there is a switch available to be controlled to change the operating RF from the ADoC frequency band to WLAN frequency band.

In this Polling mechanism implementation, the detailed MAC layer procedure in a dual mode ADoC device is as follows:
1. To work in dual mode, the STA in ADoC system must have the ability to start at least 2 VAPs (virtual Access Point), one for a STA in ADoC, the other as an AP for standard WiFi system.
2. Once an ADoC STA was started and successfully allocated to ADoC AP, it will stop transmitting data until it receives a poll command from AP. After being polled, the STA will transmit its buffered uplink packet as soon as possible. After finishing the committed number of packets, the STA must stop transmitting data, and then again wait for the next polling. At this time, the STA can switch to standard WiFi mode to provide service to other WLAN devices.
3. Because the number of STAs online and the data length for each STA in the ADoC system is not fixed, the length for each subframe is therefore not fixed. In order to ensure that the STA currently changed to standard WiFi mode does not miss its next polling, the present principles implement a limitation for the ADoC system. That is, each subframe must have a minimum length, Tmin, and in order to ensure some QoS requirement, the subframe must have a maximum length, Tmax, so Tmin < Tsubframe < Tmax.
4. The STA changed to standard WiFi mode must maintain a precise timer which value less than Tmin. When the timer expires, it must change back to ADoC mode immediately to wait for the next polling.
   After changing back to ADoC mode from standard WiFi mode, the dual mode device will send CTS (Clear To Send) to all STAs in the residential WLAN. The Duration field in the CTS frame is long enough such that no STA in WiFi mode will transmit data before the dual mode device changes back to WiFi mode. Upon receiving the CTS message, all STAs will update their NAV(Network Allocation Vector) and refrain from accessing the WLAN medium for the duration reported by the CTS message. After that, the device will control the switch (3102) to change the operation spectrum to the ADoC frequency band, and operate in accordance with the Polling mechanism procedure.
   After the dual mode device switches to standard WiFi mode again, if it receives data to transmit to the STAs, the data will be transmitted immediately. The standard WiFi STAs's NAV will be updated according to duration field in the data packet. The system will then start working as DCF normally. If there is no data to transmit to STAs, the dual mode device must transmit another CTS frame to update the system NAV.
5. As for the broadcast/multicast frames for WiFi BSS, they can be processed as would be done with the normal WiFi protocol.
   Various implementations access data (for example) in one form or another. The term "accessing" is used as a broad term that includes, for example, obtaining, retrieving, receiving, manipulating, or processing in some manner. Accordingly, a description of accessing data (for example) is a broad description of possible implementations.

Features and aspects of described implementations may be applied to various applications. Applications include, for example, individuals using host devices in their homes to communicate with the Internet using an Ethernet-over-cable communication framework, as described above. However, the features and aspects herein described may be adapted for other application areas and, accordingly, other applications are possible and envisioned. For example, users may be located outside of their homes, such as, for example, in public spaces or at their jobs. Additionally, protocols and communication media other than Ethernet and cable may be used. For example, data may be sent and received over (and using protocols associated with) fiber optic cables, universal serial bus (USB) cables, small computer system interface (SCSI) cables, telephone lines, digital subscriber line/loop (DSL) lines, satellite connections, line-of-sight connections, and cellular connections.

The implementations described herein may be implemented in, for example, a method or process, an apparatus, or a software program. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data transmission and reception. Examples of equipment include video coders, video decoders, video codecs, web servers, set-top boxes, laptops, personal computers, and other communication devices. As should be clear, the equipment may be mobile and even installed in a mobile vehicle.

Additionally, the methods may be implemented by instructions being performed by a processor, and such instructions may be stored on a processor-readable medium such as, for example, an integrated circuit, a software carrier or other storage device such as, for example, a hard disk, a compact diskette, a random access memory ("RAM"), or a read-only memory ("ROM"). The instructions may form an application program tangibly embodied on a processor-readable medium. As should be clear, a processor may include a processor-readable medium having, for example, instructions for carrying out a process.

Regarding storage devices, note that a variety of devices throughout the described implementations typically include one or more storage devices. For example, although not explicitly indicated, the modems 1010 and 1020, and the AP 1030 (as well as a variety of other elements) typically include one or more storage units for storing data. Storage may be, for example, electronic, magnetic, or optical.

As will be evident from the foregoing disclosure, implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream, packetizing the encoded stream according to any of a variety of frame structures, and modulating a carrier with the packetized stream. The information that the signal carries may be, for example, analog or digital information. The signal may be transmitted over a variety of different wired or wireless links, as is known.

## Claims

1. A method comprising:
communicating over multiple media including a wireless medium and a wired medium, the communicating using one or more of (1) a wireless mode for communicating over a wireless medium using a wireless protocol, and (2) a wired mode for communicating over the wired medium using a variation of the wireless protocol, wherein said communicating further comprises providing a Media Access Control (MAC) layer utilizing a polling mechanism basic access method for the wired mode; and
switching between the wireless mode and the wired mode.

2. The method of claim 1, wherein:
communicating comprises receiving a communication in a particular one of the wireless mode or the wired mode,
switching comprises switching from the particular one of the two modes of operation to the other of the two modes of operation, and
communicating further comprises (1) converting the received communication from the protocol associated with the particular one of the two modes of operation into the protocol associated with the other of the two modes of operation, and (2) transmitting the received communication in the other of the two modes of operation.

3. The method of any of claims 1-2, further comprising entering the wireless mode during a waiting period in a polling mechanism superframe of subframes.

4. The method of claim 3, wherein the polling mechanism superframe of subframes further comprises:
a DBM period;
at least one polling subframe; and
a DCF period.

5. The method of claim 4, wherein the DBM period comes after a beacon frame in the polling mechanism superframe.

6. The method of claim 4, wherein the DBM period is during each polling subframe.

7. The method of any of claims 4-6, wherein an access point polls each station only once during each of said at least one polling subframe.

8. An apparatus for performing any of the methods of claims 1-7.

9. The apparatus of claim 8 wherein one or more means are provided for performing all or part of the methods of claims 1-7.

10. The apparatus of any of claims 8-9, wherein the apparatus comprises:
a communication unit (3100, 3102, 3104, 3106) for communicating over multiple media including the wireless medium and the wired medium, the communication unit being operable (1) in the wireless mode for communicating over the wireless medium using the wireless protocol, (2) in the wired mode for communicating over the wired medium using the variation of the wireless protocol, and (3) to switch between the wireless mode and the wired mode; wherein the communication unit further comprises the Media Access Control (MAC) layer utilizing the polling mechanism basic access method for the wired mode; and
a switch (3102) to switch the communication unit between the wireless mode and the wired mode, and
further wherein said communication unit comprises:
a communication device (3100)connected to the switch and configured to enable a user device to communicate with the communication unit;
a wireless local area network (WLAN) device (3104) connected to the switch, the WLAN device being configured to connect to a wireless network via an antenna; and
a wired network device (3106) connected to the switch, the wired network device configured to connect to a wired network.

11. The apparatus of any of claims 8-9, wherein the apparatus comprises:
a communication unit (3100, 3102, 3104, 3106) for communicating over multiple media including the wireless medium and the wired medium, the communication unit being operable (1) in the wireless mode for communicating over the wireless medium using the wireless protocol, (2) in the wired mode for communicating over the wired medium using the variation of the wireless protocol, and (3) to switch between the wireless mode and the wired mode; wherein the communication unit further comprises the Media Access Control (MAC) layer utilizing the polling mechanism basic access method for the wired mode; and
a switch (3102) to switch the communication unit between the wireless mode and the wired mode, and
further wherein said communication unit comprises:
a wireless local area network (WLAN) device (3104) connected to the switch;
a WLAN antenna (2908) connected to the switch;
a communication device (3100) connected to the WLAN device; and
a converter (3108) connected to the switch and configured to be connected to a wired network and to convert a wireless-mode frequency band to a wired-mode frequency band.

12. The apparatus of any of claims 8-11, wherein the communication unit is configured to connect to a coaxial cable network as the wired network.

13. The apparatus of any of claims 8-12, wherein:
the variation in the wireless protocol in the wired mode comprises using a polling subframe in a polling mechanism superframe of subframes, and
after a station associates with a BSS created by an access point, the transmission of data from a station during the polling subframe occurs only after receiving polling information from the access point.

14. The apparatus of any of claims 8-13, wherein:
the wireless mode is entered during a waiting period in a polling mechanism superframe of subframes, and
the waiting time period comprises a time period between the termination of a transmitted packet by a station to an access point, and the receipt of a next poll by the station from the access point.

15. The apparatus of any of claims 8-13, wherein:
the wireless mode is entered during a waiting period in a polling mechanism superframe of subframes, and
the waiting time period comprises a time period between the receipt of a poll by a station from an access point and the receipt of a next poll by the station from the access point when the station has no data to transmit.

16. A processor-readable medium including instructions stored on the processor-readable medium for performing any of the methods of claims 1-7.

17. The processor-readable medium of claim 16, wherein the instructions for communicating comprise instructions for converting a communication having been received in a particular one of the two modes of operation, from the protocol associated with the particular one of the two modes of operation into the protocol associated with the other of the two modes of operation.
